Europäisches Patentamt

European Patent Office

Office européen des brevets

(11) Veröffentlichungsnummer: **0 392 143**
A2

## (12) EUROPÄISCHE PATENTANMELDUNG

(21) Anmeldenummer: **90101738.4**

(51) Int. Cl.⁵: **B29C 67/14, //B29L30:00**

(22) Anmeldetag: **29.01.90**

(30) Priorität: **10.04.89 DE 3911641**

(43) Veröffentlichungstag der Anmeldung:
**17.10.90 Patentblatt 90/42**

(84) Benannte Vertragsstaaten:
**DE FR GB IT SE**

(71) Anmelder: **HERMANN BERSTORFF**
**Maschinenbau GmbH**
**An der Breiten Wiese 3/5**
**D-3000 Hannover 61(DE)**

(72) Erfinder: **Orth, Herbert**
**Bohlaustrasse 31**
**D-3000 Hannover 61(DE)**

(54) **Kombinierte Kalanderanlage zum beidseitigen Belegen von Textil- oder Stahlcord mit einer Kautschukschicht.**

(57) Es wird eine kombinierte Kalanderanlage zum beidseitigen Belegen von Textil- oder Stahlcord mit einer Kautschukschicht aufgezeigt, die aus einem Textilcordteil für den unbelegten Textilcord, einem Stahlcordteil für den unbelegten Stahlcord, einem Vierwalzen-Kalander und einem den Kalander in Arbeitsrichtung nachgeordneten Nachfolgeeinrichtungsteil für den doppelseitig mit Kautschuk belegten Textil- oder Stahlcord besteht. Durch die Anordnung des Textilcordteiles, des Stahlcordteiles und des Nachfolgeeinrichtungsteiles zusammen mit dem Kalander auf einer gemeinsamen Gebäudeebene, wird ein verbesserter Belegvorgang des Stahlcordes und eine Einsparung von Fabrikationshallenfläche erreicht.

Fig.2

EP 0 392 143 A2

## Kombinierte Kalanderanlage zum beidseitigen Belegen von Textil- oder Stahlcord mit einer Kautschukschicht

Die Erfindung betrifft eine kombinierte Kalanderanlage, wie beschrieben im Oberbegriff des ersten Patentanspruchs.

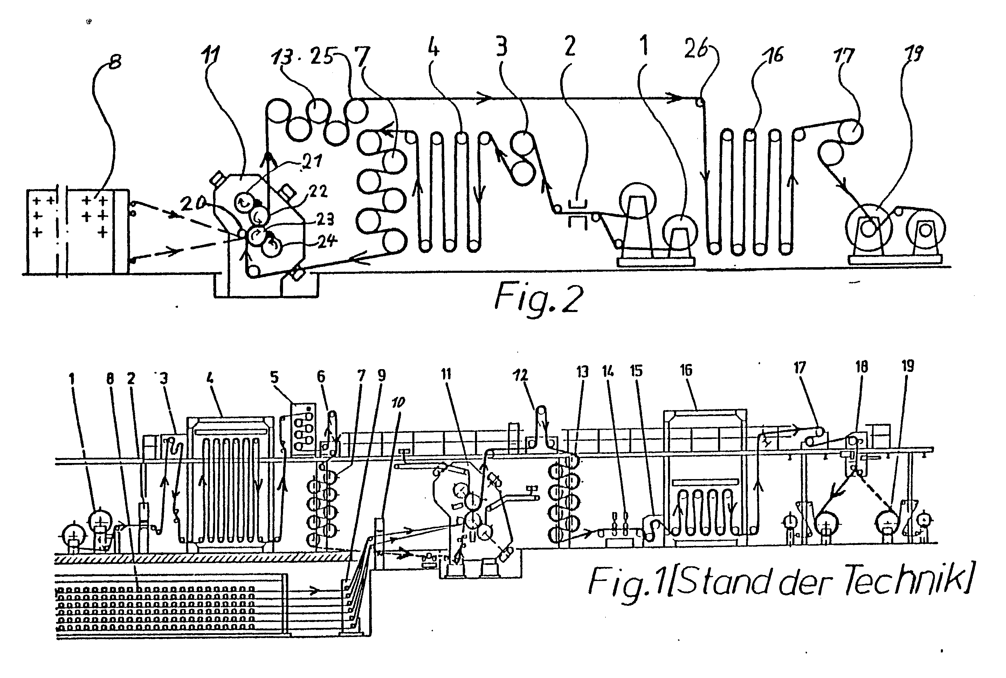

Eine derartige kombinierte Kalanderanlage wird in Fig. 1 im Detail gezeigt. Der Teil der Anlage, der für die Vorbereitung des Textilcords für Autoreifen eingesetzt wird, ist vor dem Kalander angeordnet. Die Nachfolgeeinrichtungen für den im Kalander beidseitig mit Kautschuk belegten Textilcord ist in Arbeitsrichtung hinter dem Kalander angeordnet. Im einzelnen setzt sich der Textilcordteil für den unbelegten Textilcord aus folgenden Maschinenaggregaten zusammen: Der Zweifach-Gewebe-Abwickeleinrichtung 1, der Spleißpresse zum Endlosmachen der Cordbahn 2, dem Einzugswerk 3, dem Einlaufgewebespeicher 4, dem Rückhaltewerk 5, der Tänzerwalze zur Zugspannungsregelung 6 und der Vorwärmeinrichtung 7.

Wenn die in Fig. 1 gezeigte Kalanderanlage zum beidseitigen Belegen von Stahlcord für Autoreifen eingesetzt werden soll, werden die einzelnen Kettdrähte von den Spulen des Spulengatters 8, welches in einer darunter liegenden Halle angeordnet ist, abgezogen, dem Umlenkstand 9 mit Zugmeßeinrichtung und dann in der darüber liegenden Halle der Spleißpresse 10 zugeführt. Im Kalander 11 werden die Drähte beidseitig mit Kautschuk belegt.

Nach dem Belegevorgang im Kalander 11 wird sowohl der Textilcord als auch alternativ der Stahlcord den Nachfolgeeinrichtungen zugeführt, die sich aus folgenden Maschinenaggregaten zusammensetzen: Der Tänzerwalze 12 zur Zugspannungsregelung, der Kühleinrichtung 13, dem Schußfadenbecher 14, wenn Textilcord verarbeitet wird, dem Zugwerk 15, dem Auslaufgewebespeicher 16, dem Halte- und Auszugswerk 17, der Schneideinrichtung 18 und schließlich der Zweifach-Aufwickeleinrichtung 19.

Durch die Umlenkung der Stahldrähte ergeben sich technologische Probleme, weil die einzelnen Drähte (bei einer Arbeitsbreite von 1.600 mm des Kalanders 11 etwa 1.200 Drähte) durch eine Etagendecke geführt und über eine Rillenwalze dem Walzenspalt zwischen der zweiten und dritten Walze zugeführt werden müssen.

Es ist nachteilig, daß der Stahlcordteil der Kalanderanlage getrennt von der übrigen Anlage angeordnet ist, so daß sich beim Anfahren der gesamten Anlage Kommunikationsprobleme des Bedienungspersonals ergeben.

Der Platzbedarf einer derart gestalteten Anlage ist beträchtlich.

Es ist die Aufgabe der Erfindung, die Anordnung einer kombinierten Kalanderanlage für alternatives Belegen von Textilcord oder Stahlcord so zugestalten, daß damit die Technologie des Belegens verbessert wird, und daß eine erhebliche Einsparung an teurer Fabrikationshallenfläche verwirklicht werden kann.

Die Aufgabe wird bei einer kombinierten Kalanderanlage zum doppelseitigen Belegen von Textil- oder Stahlcord beidseitig mit einer Kautschukschicht durch die im Kennzeichen von Patentanspruch 1 genannten Merkmale gelöst.

Durch die Anordnung des Textilcordteiles, des Stahlcordteiles und des Nachfolgeeinrichtungsteiles auf einer gemeinsamen Gebäudeebene wird insbesondere die Herstellung von Stahlcord erheblich verbessert, weil die Stahldrähte direkt, d.h. ohne eine Umlenkung, in den Walzenspalt des Kalanders einlaufen können. Komplizierte Umlenkeinrichtungen für die Vielzahl der dünnen Stahldrähte sind somit entbehrlich. Der äußerst zeitaufwendige Enfädelvorgang, der strikt nebeneinander zu führenden Stahldrähte durch eine Hallendecke hindurch, entfällt.

Der Anfahrvorgang mit der sehr umständlichen Einfädelung der über Tausend einzelnen Drähte um die Rillenwalze in der unteren Gebäudeebene und in der darüber angeordneten Gebäudeebene wird erheblich begünstigt.

Ein großer Vorteil ist, daß die Hallendecke der Fabrikationshallen durch die waagerechte Anordnung der Kühleinrichtung für den belegten Textil- oder Stahlcord wesentlich niedriger gehalten und der Kellerraum entfallen kann. Die Führung der belegten Cordbahn über den Anlagenteil für die unbelegte Textilcordbahn hinweg zur Aufwickeleinrichtung verringert den Platzbedarf der gesamten Anlage.

In den Zeichnungen wird in

Fig. 1 eine kombinierte Kalanderanlage gemäß dem Stand der Technik zum Belegen von Textil- oder Stahlcord gezeigt.

Fig. 2 die erfindungsgemaße kombinierte Kalanderanlage gezeigt.

Der für den unbelegten Textilcord eingesetzte Anlagenteil gemäß Fig. 1 setzt sich aus folgenden Maschinenaggregaten zusammen:

1 der Zweifach-Gewebe-Abwickeleinrichtung,

2 der Spleißpresse zum Endlosmachen der Cordbahn,

3 das Einzugswerk,

4 der Einlauf-Gewebespeicher,

5 das Rückhaltewerk,

6 die Tänzerwalze zur Zugspannungsregelung,

7 die Vorwärmeinrichtung,

8 das Spulengatter,

9 der Umlenkstand mit Zugmeßeinrichtung,

10 die Zwei-Etagen-Spleißpresse,

11 der 4-Walzen-Kalander,

12 die Tänzerwalze zur Zugspannungsregelung,

13 die Kühleinrichtung,

14 der Schußfadenbrecher,

15 das Zugwerk,

16 der Auslauf-Gewebespeicher,

17 das Halte- und Auszugswerk,

18 die Stahlcord-Schneideinrichtung und

19 die Zweifach-Aufwickeleinrichtung.

Bei der in Fig. 2 gezeigten erfindungsgemäßen Anlage wurde aus Gründen einer besseren Übersichtlichkeit folgende Maschinenaggregate weggelassen, die jedoch trotzdem gebraucht werden. Nicht gezeigt wird vom Anlagenteil für den unbelegten Textilcord:

das Rückhaltewerk 5 und

die Tänzerwalze 6 zur Zugspannungsregelung,

die in Fig. 1 zu sehen sind.

Vom Anlagenteil für den unbelegten Stahlcord sind aufgrund der erfindungsgemäßen Anordnung die in Fig. 1 gezeigten Einrichtungen entbehrlich: der Umlenkstand 9 mit der Zugmeßeinrichtung und eine Etage der Spleißpresse 10.

Von der Nachfolgeeinrichtung werden in Fig. 2 folgende vorhandene Maschinenaggregate nicht gezeigt, die in Fig. 1 jedoch zu sehen sind:

die Tänzerwalze 12 zur Zugspannungsregelung für den belegten Cord,

der Schußfadenbrecher 14, der nur für die Textilcordherstellung benötigt wird,

das Zugwerk 15 und

die Stahlcordschneideinrichtung 18.

Das in Fig. 2 gezeigte Spulengatter 8 mit einer Vielzahl von einzelnen Spulen für die Stahldrähte wurden in Arbeitsrichtung des Z-Kalanders 11 vor diesem angeordnet. Die Stahldrähte können somit direkt in den Walzenspalt zwischen der zweiten und dritten Kalanderwalze 22 und 23 eingeführt werden, nachem die einzelnen Drähte nur eine Rillenwalze 20 passiert haben.

In den jeweiligen vorhergehenden Walzenspalten zwischen der ersten und zweiten Kalanderwalze 21 und 22 wird jeweils der aufgegebene Kautschuk zu einer dünnen Bahn ausgewalzt, dann im folgenden Kalanderwalzenspalt in die von den Kalanderwalzen mitgeschleppten Stahldrähte bzw. in die Textilcordbahn hineingedrückt. Auf diese Weise wird der Stahl- bzw. Textilcord beidseitig mit einer Kautschukbahn im mittleren Walzenspalt verpreßt.

Es ist besonders vorteilhaft, die Kühleinrichtung 13 des Nach folgeeinrichtungsteiles waagerecht anzuordnen und Umlenkwalzen 25 und 26 vorzusehen, weil dann die Führung des belegten Textil- oder Stahlcordes über den Anlagenteil für den unbelegten Textil- oder Stahlcord hinweg möglich ist. Es kann somit in einer Fabrikationshalle geringerer Bauhöhe produziert werden.

Nachfolgend wird anhand der Fig. 1 der Belegvorgang von Textilcord beschrieben. Der Belegvorgang ist identisch mit dem Belegvorgang der in Fig. 2 gezeigt wird, nur daß in Fig. 2 einige Maschinenaggregate, wie bereits erwähnt, aus Gründen der besseren Übersicht weggelassen wurden.

In eine der beiden Abwickelstellen 1 wird der Ballen mit dem zu belegenden Textilcord eingehängt. Der Anfang eines neuen Cordballens und das Ende des Vorläufers oder Cordballens werden in der Spleißpresse 10 zusammengespleißt.

Mit dem Einzugswerk 3 wird der Cord von einer der Abwickelstellen 1 abgezogen und in den Einlaufwarenspeicher 4 gefördert. Das Einzugswerk 3 arbeitet mit der Anlagengeschwindigkeit. Die abgewickelte Cordlänge wird mit einem Meterzähler kontrolliert. Nach Ablauf einer vorgewählten Länge wird das Einzugswerk 3 automatisch auf eine Voreilung von 50 % zur Anlagengeschwindigkeit umgeschaltet, so daß der Warenspeicher 4 für die Zeit des Ballenwechsels an den Abwickelstellen 1 gefüllt ist.

Der Cord wird mit einem nur in Fig. 1 gezeigten Rückhaltewerk 5 aus dem Einlaufwarenspeicher 4 gezogen, bzw. wird zwischen dieser Einrichtung und dem Zugwerk 3 hinter dem Kalander der Zug der Cordbahn konstant gehalten.

Die Tänzerwalze 6 (nur in Fig. 1) wird hydraulisch beaufschlagt. Der Cordzug ist stufenlos von 200 bis 2.000 kg in einem Steuerpult einstellbar.

Zwischen dem Rückhaltewerk 5 und der Tänzerwalze 6 durchläuft der Textilcord die Trockeneinrichtung 7, in welcher er für den Kalanderprozeß getrocknet und vorgewärmt wird.

Entsprechend der Cordqualität wird die Temperatur der Trocken-bzw. Vorwärmeinrichtung 7 an einer Temperaturregelanlage eingestellt.

Im Kalander 11 wird der Cord in einem Arbeitsgang doppelseitig mit Kautschuk belegt.

Zwischen den Walzen 21 und 22 sowie 23 und 24 wird je eine Kautschukbahn kalandriert. Diese Kautschukbahnen werden zwischen den Walzen 22 und 23 von unten und oben auf den Cord dubliert, so daß dieser dann doppelseitig belegt ist.

Von der Walze 22 wird der belegte Cord senkrecht nach oben abgezogen.

Nach dem Kalander 11 wird der belegte Cord über eine Trommel-Kühleinrichtung 13 geführt und abgekühlt. Die ersten Trommeln sind nicht angetrieben, sondern werden vom Material mitgeschleppt. Es ist dadurch sichergestellt, daß durch den Kühlprozeß und der damit verbundenen Schrumpfung in der Cordbahn sich keine unkontrollierte Zugkraft aufbauen kann.

Zwischen der Kühleinrichtung 13 und dem Zugwerk 15 ist ein Schußfadenbrecher 14 angeordnet. Mit dieser Einrichtung werden die Schußfäden so zerrissen, daß sie keine Verbindung mehr mit den Kett-Cordfäden haben. Dieser Arbeitsgang ist für einige Cordtypen für die Weiterverarbeitung zu Gürtelreifen besonders wichtig.

Mit dem Zugwerk 15 wird der Cord in den Auslaufwarenspeicher 16 gefördert und der Doppellaufwickeleinrichtung zugeführt.

Unter dem Auszugswerk 17 wird abwechselnd der Cord von einer der beiden Aufwickelstellen 19 der Doppelaufwickeleinrichtung aufgewickelt. Quer durchgeschnitten wird die Cordbahn mit einer Schneideinrichtung 18, die von einem Meterzähler gesteuert wird. Das Anwickeln und Restwickeln erfolgt automatisch. Der Cord wird in Zwischenleinen aufgewickelt.

Für die Herstellung von Stahlcord wird der Nachfolgeeinrichtungsteil in fast unveränderter Gestaltung eingesetzt.

Nach dem Spleißvorgang mit einem Vorläufer werden durch den Vorläufer die Stahldrähte durch die Öffnung der Gatterhallendecke in Fig. 1 gezogen und dem Kalanderwalzenspalt zugeführt.

Der Abstand der Drähte zueinander wird durch die hydraulisch betätigte Rillenwalze 20 bestimmt.

Ab dem Kalanderbereich unterscheidet sich das Belegen von Stahlcord nicht von dem Prozeß des Belegens von Textilcord.

**Bezugszeichenliste:**

1 = Zweifach-Gewebe-Abwickeleinrichtung
2 = Cordbahn
3 = Einzugswerk
4 = Einlaufgewebespeicher
5 = Rückhaltewerk
6 = Zugspannungsregelung
7 = Vorwärmeinrichtung
8 = Spulengatter
9 = Umlenkstand
10 = Spleißpresse
11 = Kalander
12 = Tänzerwalze
13 = Kühleinrichtung
14 = Schußfadenbrecher
15 = Zugwerk
16 = Auslauf-Gewebespeicher
17 = Halte- und Abzugswerk
18 = Stahlcord-Schneideinrichtung
19 = Zweifach-Aufwickeleinrichtung
20 = Rillenwalze
21 = Kalanderwalze
22 = Kalanderwalze
23 = Kalanderwalze
24 = Kalanderwalze
25 = Umlenkwalzen
26 = Umlenkwalzen

**Ansprüche**

1. Kombinierte Kalanderanlage zum beidseitigen, Belegen von Textil- oder Stahlcord mit einer Kautschukschicht, bestehend aus einem Textilcordteil für den unbelegten Textilcord, einem Stahlcordteil für den unbelegten Stahlcord, einem Vierwalzen-Kalander und einem dem Kalander in Arbeitsrichtung nachgeordneten Nachfolgeeinrichtungsteil für den doppelseitig mit Kautschuk belegten Textil- oder Stahlcord,
**dadurch gekennzeichnet,**
daß der Textilcordteil (1, 2, 3, 4, 7), der Stahlcordteil (8) und der Nachfolgeeinrichtungsteil (13, 16, 17, 19) auf einer gemeinsamen Gebäudeebene angeordnet sind.

2. Kombinierte Kalanderanlage nach Anspruch 1,
**dadurch gekennzeichnet,**
daß der Stahlcordteil (8) in Arbeitsrichtung des Kalanders vor dem Kalander (11) und der Textilcordteil (1, 2, 3, 4, 7) und der Nachfolgeeinrichtungsteil (13, 16, 17, 19) in Arbeitsrichtung des Kalanders (11) hinter dem Kalander auf der gemeinsamen Gebäudeebene angeordnet sind.

3. Kombinierte Kalanderanlage nach den Ansprüchen 1 und 2,
**dadurch gekennzeichnet,**
daß der Textilcordteil (1, 2, 3, 4, 7) für den unbelegten Textilcord aus einer Zweifach-Gewebe-Abwickeleinrichtung (1), einer Spleißpresse (2) zum Endlosmachen der Cordbahnen, einem Einzugswerk (3), einem Einlaufgewebespeicher (4) und einer Vorwärmeinrichtung (7) gebildet wird.

4. Kombinierte Kalanderanlage nach den Ansprüchen 1 und 2,
**dadurch gekennzeichnet,**
daß der Stahlcordteil (8) für den unbelegten Stahlcord aus einem Spulengatter (8) für die Stahldrähte gebildet wird.

5. Kombinierte Kalanderanlage,
**dadurch gekennzeichnet,**
daß der Nachfolgeeinrichtungsteil (13, 16, 17, 19) aus einer Kühleinrichtung (13), einem Auslaufgewebespeicher (16), einem Halte- und Abzugswerk (17), und einer Zweifach-Aufwickeleinrichtung (19) gebildet wird.

6. Kombinierte Kalanderanlage,
**dadurch gekennzeichnet,**
daß der Kalander (11) als 4-Walzen-Z-Kalander ausgebildet ist.

7. Kombinierte Kalanderanlage nach den Ansprüchen 1, 2 und 5,
**dadurch gekennzeichnet,**

daß die Kühleinrichtung (13) des Nachfolgeeinrichtungsteiles waagerecht angeordnet ist und Umlenkwalzen (25, 26) vorgesehen werden für die Führung des belegten Textil- oder Stahlcordes über den Anlagenteil für den unbelegten Textil-oder Stahlcord hinweg.

Fig.2

Fig.1[Stand der Technik]

EP 0 392 143 A2